# EUROPÄISCHE PATENTSCHRIFT

(11) **EP 2 588 217 B1**
(45) Veröffentlichungstag und Bekanntmachung des Hinweises auf die Patenterteilung: **22.02.2017**
(21) Anmeldenummer: 11722404.8
(22) Anmeldetag: 26.05.2011
(51) Int. Cl.: B01D 53/22, C10L 3/10

(54) **VERFAHREN ZUR TRENNUNG VON GASEN**
PROCESS FOR SEPARATION OF GASES
PROCÉDÉ DE SÉPARATION DE GAZ

(30) Priorität: 01.07.2010 EP 10168121
(43) Veröffentlichungstag der Anmeldung: 08.05.2013
(73) Patentinhaber: Evonik Fibres GmbH, 4861 Schörfling am Attersee (AT)
(72) Erfinder: UNGERANK, Markus, A-4320 Perg (AT); BAUMGARTEN, Goetz, 45721 Haltern am See (DE); PRISKE, Markus, 40472 Düsseldorf (DE); ROEGL, Harald, A-4702 Wallern an der Trattnach (AT)
(74) Vertreter: Wolf, Oliver
(86) Internationale Anmeldenummer: PCT/EP2011/058636
(87) Internationale Veröffentlichungsnummer: WO 2012/000727

(56) Entgegenhaltungen:
- WO-A1-00/06293
- WO-A1-2011/009919
- US-A- 5 919 285
- US-A1- 2006 196 355
- US-B1- 6 168 649
- US-B1- 6 565 626
- BAKER R W ET AL: "Natural gas processing with membranes: An overview", INDUSTRIAL AND ENGINEERING CHEMISTRY RESEARCH 20080402 AMERICAN CHEMICAL SOCIETY US, Bd. 47, Nr. 7, 2. April 2008 (2008-04-02), Seiten 2109-2121, XP002612501, DOI: DOI:10.1021/IE071083W in der Anmeldung erwähnt

## Beschreibung

Die Erfindung betrifft ein Verfahren unter Verwendung einer Vorrichtung mit Verkettung von Gasseparationsmembranmodulen, zur Auftrennung von Gasgemischen in zwei Fraktionen von jeweils erhöhter Reinheit.

Mittels einer Gasseparationsmembran können Gasgemische aufgrund unterschiedlicher Permeabilitäten (= Stoffstrom pro Zeiteinheit, Fläche, Differenzdruck und Schichtdicke) der Einzelgase in einem Kunststoff getrennt werden. Die Kunststoffe werden im Allgemeinen zu Hohlfasern oder Flachmembranen verarbeitet. Die Membrane zeichnen sich durch eine sehr dünne Trennschicht an der Oberfläche der Membran aus, sodass die Permeanz (= Stoffstrom pro Zeiteinheit, Fläche und Differenzdruck) der Membran möglichst groß ist.

Das mit einer Membran im einfachen Durchtritt erreichbare Trennergebnis ist neben der Selektivität der Membran vom Druckverhältnis zwischen Hochdruck- und Niederdruckseite der Membran abhängig. Je größer das Druckverhältnis ist, desto besser ist das maximal erzielbare Trennergebnis.

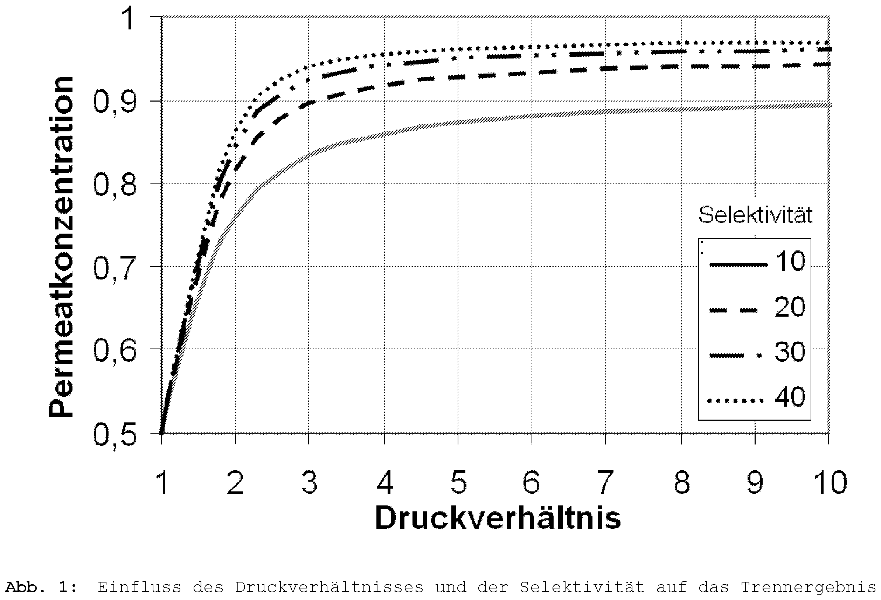

Im Bereich geringer Druckverhältnisse verlaufen die Kurven für die verschiedenen Selektivitäten dicht beieinander (siehe Abbildung 1). Das Trennergebnis wird in diesem Bereich durch das Druckverhältnis bestimmt. Dieser Bereich wird daher als "drucklimitiert" bezeichnet. Im Bereich hoher Druckverhältnisse ist das Trennergebnis kaum noch durch das Druckverhältnis beeinflussbar. Dieser Bereich wird als "selektivitätslimitiert" bezeichnet.

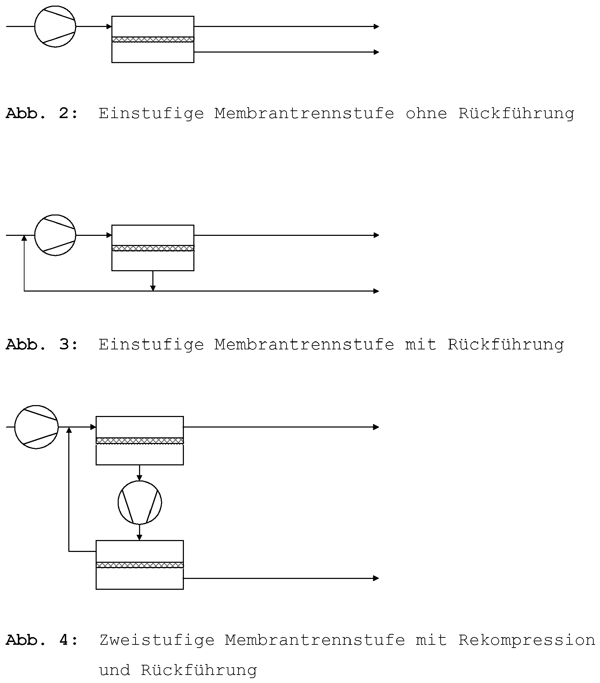

Literaturbekannt sind eine Reihe von Membranverschaltungen für die Trennung von Gasen. In Baker, IndEngChemRes, Natural Gas Processing with Membranes, 47 (2008) findet sich eine ausführliche Auflistung verschiedener bekannter Verschaltungen. So lassen sich am Beispiel der Trennung von Methan (Retentatgas) und CO₂ (Permeatgas) mit einem einfachen einstufigen Membrantrennschritt gemäß Abb. 2 zwar hohe Reinheiten im Produktstrom (98% CH₄) erreichen. Die Qualität des permeatseitigen Abgasstroms ist dabei jedoch nicht beeinflussbar und von geringer Reinheit (44% CO₂). Entsprechend groß ist der Schlupf bzw. Verlust von Methan.

Bei einer einstufigen Verschaltung mit Rückführung (Abb. 3) lassen sich die Reinheiten leicht erhöhen. Das grundsätzliche Problem der geringen Retentatgasausbeute und der Permeatgasqualität lässt sich damit jedoch nicht lösen.

Für höhere Permeatreinheiten und höheren Ausbeuten der zurückgehaltenen Komponente sind eine Reihe mehrstufiger Verschaltungen bekannt. In einer einfach permeatgestuften Verschaltung mit Rekompression und Rückführung des ersten Permeats (Abb. 4) können Permeatreinheit (86%) und Methanausbeute verbessert werden.

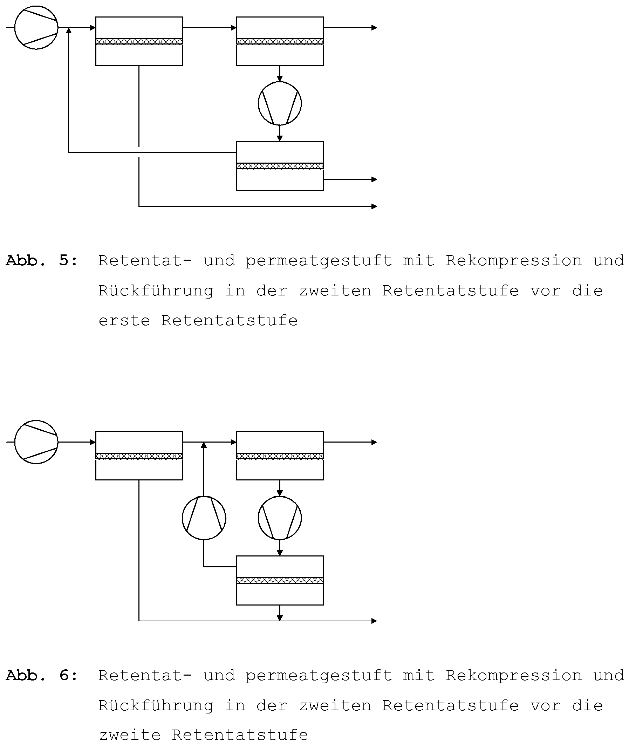

Tritt die besser permeierende Komponente in erhöhten Konzentrationen (30%) auf so kann literaturgemäß eine Verschaltung nach Abb. 5 vorteilhaft sein. Es werden zwei permeatgasreiche Ströme (82% CO2, 93% CO2) und ein retentatgasreicher Strom (82% CH4) erzeugt.

Bhide (MemSci, Hybrid processes for the removal of acid gases from natural gas, 1998) zeigt einen dreistufigen Prozess für die Entfernung von Sauergasen aus Erdgas (Abb. 6). Der zu behandelnde Gasstrom wird in einer vorgeschalteten Membran einer Grobreinigung unterzogen. Das druckseitig verbleibende vorgereinigte Erdgas wird über eine weitere Membran geführt. Retentatseitig entsteht der Zielproduktstrom, das um die Sauergase abgereicherte Erdgas. Der permeatseitige, sauergasangereicherte Strom wird komprimiert und einer weiteren Membranstufe zugeführt. Das Retentat dieser Stufe wird auf das Druckniveau der vorgeschalteten Stufe verdichtet und vor diese rezirkuliert. Mit diesem zusätzlichen energetischen und finanziellen Aufwand soll die Ausbeute von Methan erhöht werden. Nachteilig an dieser Verschaltung sind die Aufwendungen für die Kompressoren sowie die unzureichenden Reinheiten des sauergasangereicherten Stroms.

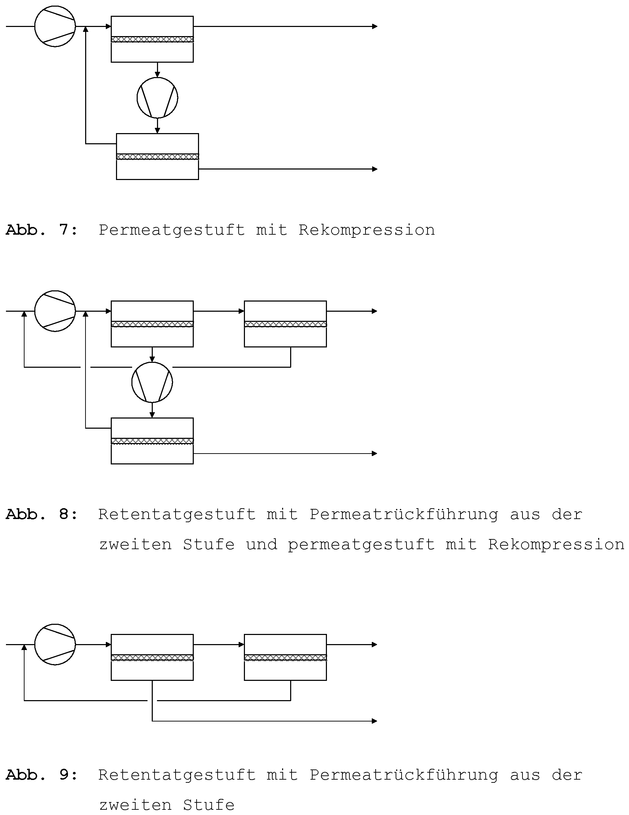

Chenar (MemSci Application of Cardo-type polyimide (PI) and polyphenylene oxide (PPO) hollow, 2008) beschreibt einen permeatgestuften Prozess mit Rekompression (Abb. 7). Nachteilig an dieser Verschaltung sind die stark begrenzten Reinheiten des Retentatgases sowie der zusätzliche Aufwand für die Rekompression.

Die EP0 799 634 offenbart eine Verschaltung gemäß Abb. 8. Nachteilig ist jedoch ein zusätzlicher potentieller Eintrag von Öl oder Wasser als Dicht- und Schmiermittel, zusätzliche hohe Investmentkosten, erhöhter Energieverbrauch durch zusätzliche Kompression sowie erhöhte Ausfallwahrscheinlichkeit durch die beweglichen Teile.

Nachteilig an den oben genannten Verfahren sind die zusätzliche Rekompression und die weiterhin deutlich zu geringen Reinheiten von Retentatgas im Gesamtretentatstrom sowie die unzureichenden Ausbeuten des Retentatgases im Retentatstrom.

Abb. 9 zeigt eine, insbesondere für die Aufbereitung von Biogas häufig vorgeschlagene und auch umgesetzte Technologie (Air Liquide und Harasek). Offenbart ist eine retentatgestufte Verschaltung mit Permeatrückführung aus der zweiten Stufe.

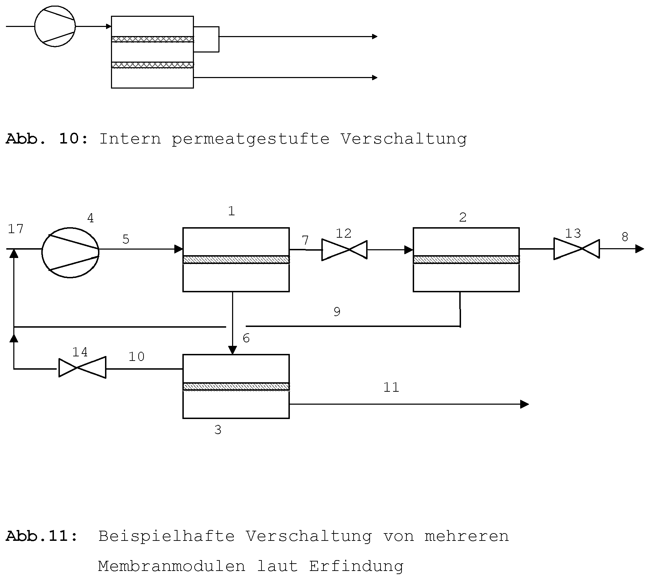

Die TU Eindhoven entwickelte eine intern gestufte Verschaltung, welche Methanreinheiten von mehr als 90% ermöglicht (siehe Abb. 10). Nachteilig an dieser Verschaltung ist die ungenügende Reinheit des Retentatgases.

In der EP 0 603 798 ist eine mehrstufige Verschaltung zur Erzeugung von Stickstoff offenbart. Der Nachteil an diesem Verfahren ist die unzureichende Reinheit der permeierenden Komponente sowie der Einsatz von mindestens zwei Kompressoren.

EP0695574 offenbart eine Verschaltung mit teilweiser Nutzung eines Permeatstroms als Sweepstrom für die Erzeugung eines möglichst reinen Retentats. Nachteilig an diesem Verfahren ist die unzureichende Qualität des Gesamtpermeats.
In US5753011 wird ein Verfahren offenbart bei der durch Kombination von permeatgestuften Membrantrennschritten und Druckwechseladsorption PSA hohe Reinheiten für zwei Produktströme erreicht werden. Nachteilig an diesem Verfahren ist der Einsatz einer aufwendigen PSA.
In EP1634946 ist ein Verfahren zur Aufbereitung von Biogas offenbart. Darin ist eine thermische Verwertung des Methans aus dem Methan abgereicherten Stroms beschrieben. Nachteilig sind die hohen Kosten und der Verlust des Gases.
In EP0596268 sind schließlich verschiedene Verschaltungen zur Erzeugung von drei verschiedenen Gaszusammensetzungen offenbart.

In der US 6, 168, 649 B1 werden Membrantrennverfahren mit drei Membrantrennstufen offenbart, wobei ein Retentat- und ein Permeatstrom der Stufen 2 bzw. 3 zum Rohgasstrom zurückgeführt wird.

Die US 6 565 626 B1 offenbart ein Verfahren zur Trennung von Gasen eines Rohgasstroms, welches durchgeführt wird in einer Apparatur umfassend eine Feedstromtrennstufe, eine Retentattrennstufe, und eine Permeattrennstufe, jeweils als Membrantrennstufen, sowie zumindest einen Kompressor, wobei die Feedstromtrennstufe einen Feedstrom, bestehend aus mindestens zwei Komponenten A und B, wobei A die leichter permeierende Komponente ist, in einen ersten Permeatstrom und einen ersten Retentatstrom auftrennt, die Retentattrennstufe den ersten Retentatstrom in einen zweiten Permeatstrom, der dem Rohgasstrom zugeführt wird, und einen zweiten Permeatstrom, an Komponente B angereichertes Produkt entnommen wird, aufteilt, die Permeattrennstufe den ersten Permeatstrom, in einen dritten Retentatstrom, der dem Rohgasstrom zugeführt wird, und einen dritten Permeatstrom, der als zweites an Komponente A angereichertes Produkt entnommen wird, aufteilt, der erste Permeatstrom keiner Rekompression unterworfen, wird, das im zweiten Permeatstrom und im dritten Retentatstrom rückgeführte Gasvolumen in Summe weniger als 60 Vol. % des Volumens des Rohgasstroms beträgt, und wobei die Konzentration der Komponente Beispiel bei der Aufbereitung und Einspeisung von Biogas in das Erdgasnetz durch die hohen Anforderungen an die Methanreinheit und durch die Begrenzung des Methanschlupfs notwendig ist, gibt es keine Verfahren, die ohne eine Rekompressionseinheit oder ohne eine weitere Aufreinigung des Permeat- oder Retentatstromes (z.B. thermische Nachverbrennung des Permeatstroms oder Druckwechseladsorption für den Retentatstrom) auskommen.

Ausgehend von diesem Stand der Technik bestand die Aufgabe der vorliegenden Erfindung darin Verfahren zur Trennung und Aufreinigung von Gasgemischen bereitzustellen, welche die Nachteile der Verfahren des Standes der Technik nicht oder nur in verringertem Maße aufweisen. Insbesondere sollen Verfahren und Vorrichtungen bereitgestellt werden, welche gleichzeitig Permeatgas und Retentatgas in hohen Reinheiten liefern. In einer weiteren speziellen Aufgabe soll dieses Verfahren und diese Vorrichtung von den Invest- und Betriebskosten vorteilhaft sein und / oder eine einfachere Verfahrensführung ermöglichen.

In einer nächsten speziellen Aufgabe soll ein möglichst universell einsetzbares/-bare Verfahren/Vorrichtung für beliebige Gasgemische bereitgestellt werden. Insbesondere soll es möglich sein, Gasströme aufzutrennen, die bei der Herstellung von Biogas und Erdgas anfallen bzw. die Kohlendioxid und Methan in Gegenwart anderer Gase wie Wasser, Wasserstoff, Schwefelwasserstoff enthalten.

Eine weitere spezielle Aufgabe der vorliegenden Erfindung war es ein Verfahren bereitzustellen, das es ermöglicht Methan-enthaltende Rohgasströme aufzureinigen, mit einer - im Vergleich zu den Verfahren des Standes der Technik, bei gleichem Durchsatz - verringerten Methanemission und somit einer verringerten Umweltbelastung durch dieses starke Treibhausgas.

Weitere nicht explizit genannte Aufgaben ergeben sich aus dem Gesamtzusammenhang der nachfolgenden Ansprüche, Beschreibung, Beispiele und Abbildungen.

Es wurde nun überraschend gefunden, dass das Verfahren gemäß Anspruch 1 reine Ströme von Permeat und Retentat liefern kann, ohne dass mehr als ein Kompressor benötigt wird oder der Permeat- oder Retentatstrom weiter durch andere Methoden aufgereinigt werden muss. Das erfindungsgemäße Verfahren ermöglicht somit gleichzeitig Permeat- und Retentartströme in hoher Reinheit zu erzielen. Die Investitionskosten für die Anlage sind niedrig, sie kommt ohne zusätzliche nachgeschaltete Aufreinigungsverfahren aus. Es gelang somit mit einem reinen Membrantrennverfahren die gestellten Aufgaben zu lösen.

Die vorliegende Erfindung wird nachfolgend im Detail beschrieben. Zuvor werden einige wichtige Begriffe definiert. Der Quotient der Permeanzen der Einzelgase ergibt die **Selektivität** der Membran zur Trennung bezüglich der zwei Gase und gibt somit an wie gut die Membran ein Gasgemisch bezüglich der beiden Komponenten auftrennen kann. Als **Permeat** wird der gesamte auf der Niederdruckseite der Membran, Membranmodule oder Membrantrennschritts anfallende Strom bezeichnet.

Als **Permeatgas** wird/werden die jeweils an der Membran, an dem Membranmodul, oder im Membrantrennschritt im **Permeatstrom** gegenüber den jeweiligen Eintrittsstrom angereicherten Komponente/Komponenten bezeichnet.

Als **Retentat** wird der Gesamte auf der Hochdruckseite der Membran, Membranmodule oder Membrantrennschritts anfallende Strom bezeichnet, der nicht durch die Membran hindurch tritt. Als **Retentatgas** wird/werden die jeweils an der Membran, an dem Membranmodul, oder im Membrantrennschritt im **Retentatstrom** gegenüber den jeweiligen Eintrittsstrom angereicherten Komponente/Komponenten bezeichnet.

**Rohgas** bzw. **Rohgasgemisch** bzw. **Rohgasstrom (17)** bezeichnet ein Gasgemisch aus mindestens zwei Gasen bzw. einen Strom dieses Gasgemisches, das/der mittels des erfindungsgemäßen Verfahrens aufgetrennt werden soll.

**Feedstrom (5)** bezeichnet einen Gasstrom, der der Feedstromtrennstufe (1) zugeführt wird. Dieser Strom kann zu der Durchführung des Verfahrens dem Rohgasstrom (17) bzw. dem durch einen Kompressor komprimierten Rohgasstrom entsprechen. Nach Rückführung des zweiten Permeatstroms (9) bzw. des dritten Retentatstroms (10) setzt sich der Feedstrom (5) aus den Gasen des Rohgasstrom (17), des zweiten Permeatstroms (9) und des dritten Retentatstroms (10) zusammen. Der Feedstrom (5) kann dabei erzeugt werden in dem die Ströme (9) und (10) entweder beide mit dem unkomprimierten Rohgasstrom (17) oder beide mit dem komprimierten Rohgasstrom oder einer mit dem unkomprimierten und einer mit dem komprimierten Rohgasstrom vermischt werden oder in dem die Ströme (9) und/oder (10) im Kompressor mit dem Rohgasstrom (17) vermischt werden. Kombinationen der zuvor beschriebenen Varianten sind von der vorliegenden Erfindung mit umfasst.

**Feedstromtrennstufe (1)** bezeichnet eine Membrantrennstufe zur Auftrennung des Feedstroms (5) in einen ersten Permeat- und einen ersten Retentatstrom (6) bzw. (7).

**Retentattrennstufe (2)** bezeichnet eine Membrantrennstufe die gleich oder unterschiedlich zur Feedstromtrennstufe (1) aufgebaut sein kann, zur Auftrennung des ersten Retentatstroms (7) in einen zweiten Permeat- und einen zweiten Retentatstrom (9) bzw. (8).

**Permeattrennstufe (3)** bezeichnet eine Membrantrennstufe die gleich oder unterschiedlich zur Feedstromtrennstufe (1) bzw. Retentattrennstufe (2) aufgebaut sein kann, zur Auftrennung des ersten Permeatstroms (6) in einen dritten Permeat- und einen dritten Retentatstrom (11) bzw. (10).

Anhand der nachfolgend beschriebenen bevorzugten und speziellen Ausführungsformen des erfindungsgemäßen Verfahrens sowie der bevorzugten und besonders geeigneten Ausführungen sowie der Zeichnungen und Beschreibungen der Zeichnungen wird die Erfindung lediglich exemplarisch näher erläutert, d. h. sie ist nicht auf diese Ausführungs- und Anwendungsbeispiele oder auf die jeweiligen Merkmalskombinationen innerhalb einzelner Ausführungsbeispiele beschränkt.

Einzelne Merkmale, die im Zusammenhang mit konkreten Ausführungsbeispielen angeben und/oder dargestellt sind, sind nicht auf diese Ausführungsbeispiele oder die Kombination mit den übrigen Merkmalen dieser Ausführungsbeispiele beschränkt, sondern können im Rahmen der technischen Möglichkeiten, mit jeglichen anderen Varianten, auch wenn sie in den vorliegenden Unterlagen nicht gesondert behandelt sind, kombiniert werden.
Gleiche Bezugszeichen in den einzelnen Figuren und Abbildungen der Zeichnungen bezeichnen gleiche oder ähnliche oder gleich oder ähnlich wirkende Komponenten. Anhand der Darstellungen in der Zeichnung werden auch solche Merkmale deutlich, die nicht mit Bezugszeichen versehen sind, unabhängig davon, ob solche Merkmale nachfolgend beschrieben sind oder nicht. Andererseits sind auch Merkmale, die in der vorliegenden Beschreibung enthalten, aber nicht in der Zeichnung sichtbar oder dargestellt sind, ohne weiteres für einen Fachmann verständlich.

Das erfindungsgemäße Verfahren beinhaltet die Verwendung einer Verkettung von drei Membrantrennstufen. Jede Stufe besteht aus einem oder mehreren physikalischen Gasseparationsmodulen, die innerhalb einer Stufe parallel und/oder seriell verschaltet sind. Als Triebkraft für die Gasauftrennung in den Modulen wird eine Partialdruckdifferenz zwischen der Retentat- und der Permeatseite in den jeweiligen Membrantrennstufen erzeugt. Die Partialdruckdifferenz kann entweder mittels eines Kompressors (4), welcher auf der Feedseite der Feedstromtrennstufe (1) angeordnet ist und/ oder mittels zumindest einer, bevorzugt einer oder zwei Vakuumpumpe(n)(in den Abb. 11 bis 13 nicht dargestellt)bevorzugt auf der Permeatseite der Retentattrennstufe (2) im zweiten Permeatstrom (9) und/oder auf der Permeatseite Permeattrennstufe (3) in dritten Permeatstrom (11), erzeugt werden. Ggf. kann es vorteilhaft sein in einer oder mehrerer der Membrantrennstufen die Partialdruckdifferenz durch einen permeatseitigen Spülgasstrom zu erzeugen bzw. zu verstärken.

In einer bevorzugten Ausgestaltungsform der vorliegenden Erfindung bringt ein Kompressor (4) das Rohgasgemisch bzw. das Gasgemisch aus dem Rohgasstrom (17) und dem zweiten Permeatstroms (9) und/oder dem dritten Retentatstroms (10), auf den gewünschten Druck im Bereich von 5 bis 100 bar, vorzugsweise jedoch auf einen Druck von 9 bis 75 bar. Der erhaltene Feedstroms (5) wird in die Feedstromtrennstufe (1) eingeleitet. In der Feedstromtrennstufe (1) wird eine Vortrennung des Rohgasgemisches in leichter permeierende Komponenten (Permeatgas), die zu einem großen Teil ins Permeat der ersten Stufe gelangen und weniger schnell permeierende Komponenten (Retentatgas), die von der Membran vorwiegend zurückgehalten und sich im Retentat anreichern, erhalten.

Das erfindungsgemäße Verfahren zeichnet sich dadurch aus, dass es/sie derart ausgestaltet ist, dass die Konzentration mindestens eines Permeatgases der Feedstromtrennstufe (1), nach Rückführung des zweiten Permeatstroms (9) und des dritten Retentatstroms (10), im Feedstrom (5)erhöht wird, bevorzugt um mindestens 2%, besonders bevorzugt um mindestens 3% und ganz besonders bevorzugt um 3 bis 40%, jeweils im Vergleich zur Konzentration im Rohgasstrom (17). Die Erhöhung kann von der Zusammensetzung des Rohgasstromes (17)abhängen und ist besonders ausgeprägt bei niedrigen Konzentrationen eines Permeatgases (10 bis 20%). In der Regel beträgt die Konzentrationserhöhung eines der Permeatgase zwischen 2 und 15% besonders bevorzugt zwischen 3 und 8 %, wenn der Gehalt des Permeatgases im Rohgasstrom (17) zwischen 30 und 70% beträgt. Die Erfinder haben nämlich herausgefunden, dass die Ausbeute des gesamten Prozesses an Retentatgas zunimmt und damit der Verlust an Retenatgas abnimmt, wenn die Konzentration des Permeatgases in der Feedstromtrennstufe (1) erhöht wird. Bei gleichem Stufentrennschnitt (=Verhältnis Permeatstrom zu Feedstrom der betrachteten Stufe) gelangt deutlich weniger Permeatgas ins Permeat der Feedstromtrennstufe (1), wenn die Konzentration mindestens einer in der Feedstromtrennstufe (1) leichter permeierenden Komponente A oder eines Permeatgases A im Feedstrom (5) erhöht wird. Analog wurde eine Erniedrigung festgestellt, wenn die Konzentration der Komponente A oder eines Permeatgases A im aufzureinigenden Feedstrom (5) sich verringert. So beträgt der Stufentrennschnitt für eine Konzentration von 50% einer Komponente A oder eines Permeatgases A im aufzureinigenden Feedstrom (5) zwischen 10 und 60%, vorzugsweise zwischen 15 und 55% und besonders bevorzugt zwischen 20 und 50 %. In einer besonders bevorzugten Ausführungsform der vorliegenden Erfindung ist das erfindungsgemäße Verfahren daher derart ausgestaltet, dass der Gehalt an Permeatgas(en) der Feedstromtrennstufe (1) im Feedstrom (5) bei größer gleich 40 Vol. %, bevorzugt mehr als 50 Vol.% und ganz besonders bei mehr als 55 Vol. % bezogen auf das Volumen des Feedstroms (5), nach Rückführung des zweiten Permeatstroms (9) und des dritten Retentatstroms (10), liegt.

Durch diese Konzentrationserhöhung der Permeatgase im Feedstrom (5) wird wie bereits erläutert die Effizienz der Feedstromtrennstufe (1) erhöht, was wiederum zur Folge hat, dass weniger Retentatgas B in den ersten Permeatstrom (6) gelangt. Dies erhöht wiederum die Effizienz der Permeattrennstufe (3) und sorgt dafür, dass auch hier weniger unerwünschtes Retentatgas in den dritten Permeatstrom (10) gelangt. Insbesondere bei der Trennung von methanhaltigen Rohgasen führt dies zu dem Vorteil, dass die unerwünschten Emissionen des klimaschädlichen Methans deutlich reduziert werden konnten.

Allgemein kann man sagen, dass in der Feedstromtrennstufe (1) bevorzugt 20 bis 100%, besonders bevorzugt 40 bis 70% der Komponente A oder eines Permeatgases A vom Feedstrom (5) in das Permeat übergehen.

Das Retentat der Feedstromtrennstufe (1) wird, optional mit Druckminderung durch ein optional vorhandenes Druckminderventil (12) oder mit Druckerhöhung, mittels des ersten Retentatstroms (7) der Retentattrennstufe (2) zugeführt, in der die Feinreinigung erfolgt. Auf der Retentatseite der Retentattrennstufe (2), d.h. im zweiten Retentatstrom (8), befindet sich bevorzugt ein Druckminderventil (13), mittels dessen der Druck im System aufrecht und konstant gehalten werden kann. Der Gehalt der schwerer permeierenden Komponenten oder eines Retentatgases B wird in der Retentattrennstufe (2) weiter erhöht, sodass der Gehalt an Komponente B oder eines Retentatgases B im zweiten Retentatstrom (8) mehr als 90%, bevorzugt mehr als 95% und besonders bevorzugt mehr als 97% beträgt. In einer besonders bevorzugten Variante zeichnet sich dass erfindungsgemäße Verfahren somit dadurch aus, dass mindestens 95%, bevorzugt mindestens 97%, besonders bevorzugt mindestens 99% und ganz besonders bevorzugt mindestens 99,5 %, der mit dem Rohgasstrom (17)in die Vorrichtung eingeführten Retentatkomponente der Feedstromtrennstufe (1) über den zweiten Retentatstrom (8) ausgeschleust werden.

Der Stufentrennschnitt der Retentattrennstufe (2) beträgt bei einer Konzentration der Komponente A oder eines Permeatgases A von 50% im ersten Retentatstrom (7) zwischen 10 und 60%, vorzugsweise zwischen 20 und 50 %.

Das Permeat der Retentattrennstufe (2) wird mittels des zweiten Permeatstroms (9) rückgeführt, dem Feedstrom (5) zugeführt und wiederaufbereitet. Dies kann - wie zuvor bei der Definition des Begriffes "Feedstrom" bereits erläutert - je nachdem ob ein Kompressor (4) oder gar ein mehrstufiger Kompressor (4) verwendet wird auf unterschiedliche Art und Weise erfolgen. Bei einem einstufigen Kompressor (4) wird der zweite Permeatstrom (9) bevorzugt der Saugseite des Kompressors (4)(siehe Abb. 11) zugeführt. Wird ein mehrstufiger Kompressor verwendet, so ist es bevorzugt, dass der zweite Permeatstrom (9) zwischen zwei Verdichtungsstufen in den Kompressor eingeführt wird.

Das mit der Komponente A oder einem Permeatgas A stark angereicherte Permeat der Feedstromtrennstufe (1) wird mittels des ersten Permeatstroms (6) der Permeattrennstufe (3) zugeführt. Falls notwendig kann mittels eines Druckminderventils (14) im Retentatstrom der Permeattrennstufe (3), d.h. dem dritten Retentatstrom (10), verhindert werden, dass der Druck des Permeats der Feedstromtrennstufe (1) auf Umgebungsdruck abfällt (siehe Abb. 11). Auf diese Weise kann die treibende Kraft für die Permeattrennstufe (3) erhalten bleiben. Die Permeattrennstufe (3) produziert ein Permeat mit einem Gehalt an Komponente A oder eines Permeatgases A größer als 95%, vorzugsweisegrößer als 97% und besonders vorzugsweise größer als 99%, welches über den dritten Permeatstrom (11) aus der Vorrichtung ausgeschleust wird. In einer besonders bevorzugten Ausführungsform ist die Vorrichtung derart ausgestaltet, dass maximal 5%, bevorzugt maximal 3%, besonders bevorzugt maximal 1% und ganz besonders bevorzugt maximal 0,5 %, der mit dem Rohgasstrom (17) in die Vorrichtung eingeführten Retentatkomponente der Feedstromtrennstufe (1) über den dritten Permeatstrom (11) ausgeschleust werden.

Der Stufentrennschnitt der Permeattrennstufe (3) beträgt zwischen 50 und 95%, vorzugsweise zwischen 70 und 93%.

Der dritte Retentatstrom (10) wird rückgeführt, dem Feedstrom (5) zugeführt und wiederaufbereitet. Dies kann, wie oben bereits erläutert, auf unterschiedliche Weise erfolgen und kann z. B. davon abhängen, ob ein Kompressor (4) oder gar ein mehrstufiger Kompressor (4) verwendet wird. Bei einem einstufigen Kompressor (4) wird der dritte Retentatstrom (10) bevorzugt der Saugseite des Kompressors (4)(siehe Abb. 11) zugeführt. Wird ein mehrstufiger Kompressor verwendet, so ist es bevorzugt, dass der dritte Retentatstrom (10) zwischen zwei Verdichtungsstufen in den Kompressor eingeführt wird.

In einer bevorzugten Ausführungsform der erfindungsgemäß verwendeten Vorrichtung wird das Retentat der Permeattrennstufe (3) ohne totale Entspannung in eine erhöhte Kompressionsstufe des Kompressors (4) zurückgeführt.

In einer weiteren bevorzugten Ausführungsform der erfindungsgemäß verwendeten Vorrichtung wird das Retentat der Permeattrennstufe (3) ohne totale Entspannung sowie das Permeat der zweite Trennstufe in eine erhöhte Kompressionsstufe des Kompressors (4) zurückgeführt.

Das erfindungsgemäße Verfahren zeichnet sich besonders dadurch aus, dass es/sie derart ausgestaltet ist, dass das im zweiten Permeatstrom (9) und im dritten Retentatstrom (10) zurückgeführte Gasvolumen in Summe weniger als 60 Vol. %, bevorzugt 10 bis 50 Vol. %, ganz besonders bevorzugt 20 bis 40 Vol. % des Volumens des Rohgasstroms (17) beträgt. Die Steuerung der Menge der rückzuführenden Retentatgasströme kann z. B. durch Auswahl der jeweiligen Membranmodule in den Membrantrennstufen (1) bis (3) oder durch die Drücke im System oder durch die Flüsse gesteuert werden. Somit zeichnet sich das erfindungsgemäße Verfahren dadurch aus, dass trotz sehr geringer Rückströme die oben näher erläuterte Erhöhung der Konzentration der Permeatkomponente im Feedstrom (5) sichergestellt wird. Dies erhöht deutlich die Effizienz des gesamten Verfahrens.

Der erste Permeatstrom (6) wird bevorzugt so geführt, dass der Feeddruck der Permeattrennstufe (3), bevorzugt mittels eines Druckminderventils (14) auf der Retentatseite der Permeattrennstufe (3), zwischen 1 und 30 bar, vorzugsweise zwischen 2 und 20 bar und besonders bevorzugt 3 und 10 bar beträt.

Wie bereits erläutert ist es besonders vorteilhaft wenn ein mehrstufiger Kompressor (4) eingesetzt wird. In diesem Fall kann nämlich auf eine komplette Entspannung des Retentats der Permeattrennstufe (3) verzichtet werden kann, da das Retentat der Permeattrennstufe (3) zwischen zwei Verdichterstufen des Kompressors (4) eingespeist werden kann.

Da die Retentattrennstufe (2) bei Entspannung auf Feeddruck im Regelfall im selektivitätslimitierten Bereich betrieben werden würde, kann es sinnvoll sein den zweiten Permeatstrom (9) lediglich auf ein höheres Druckniveau einer mehrstufigen Druckerhöhungseinheit, d.h. eines mehrstufigen Kompressors (4) zu entspannen da sich somit die Betriebskosten der Kompressionseinheit reduzieren ohne das Trennergebnis deutlich zu verschlechtern. In einer besonders bevorzugten Ausführungsform der vorliegenden Erfindung wird daher ein mehrstufiger Kompressor (4) verwendet und die Gasströme (9) und (10) diesem Kompressor jeweils zwischen zwei Kompressionsstufen zugeführt. Eine solche Verschaltung zeigt Abb. 12.

Wie bereits erwähnt kann die Vorrichtung ein oder mehrere Druckminderventile (12), (13) oder (14) umfassen. In einer bevorzugten Ausführungsform wird, bevorzugt mittels eines Druckminderventils (14), sichergestellt, dass der Druckabfall über die Feedstromtrennstufe (1), auf 1 und 30 bar, vorzugsweise zwischen 2 und 20 bar und besonders vorzugsweise zwischen 3 und 10 bar beschränkt wird. Gleichzeitig oder alternativ wird, bevorzugt mittels eines Druckminderventils (13), sichergestellt, dass der Druckabfall über die Feedstromtrennstufe (1) und die Retentattrennstufe (2), auf 1 und 100 bar, vorzugsweise zwischen 5 und 80 bar und besonders vorzugsweise zwischen 10 und 70 bar beschränkt wird.

Das erfindungsgemäße Verfahren kann im Prinzip mit allen Membranen realisiert werden, die in der Lage sind binäre Gasgemische oder Multigasgemische zu trennen. Als Membranmaterialien kommen bevorzugt aber nicht ausschließlich Kunststoffe zum Einsatz. Als Kunststoffe in der trennaktiven Schicht kommen besonders bevorzugt Polyimide, Polyamide, Polysulfone, Celluloseacetate und Derivate, Polyphenylenoxide, Polysiloxane, Polymere mit intrinsischer Mikroporosität, Mixed Matrix Membranen, Facilitated Transport Membranen, Polyethylenoxide, Polypropylenoxide, Kohlenstoffmembranen oder Zeolithe oder Mischungen daraus in Frage.

Besonders bevorzugte Membranen weisen als Materialien für die trennaktive Schicht bzw. als Material für die komplette Membran ein Polyimid der allgemeinen Formel 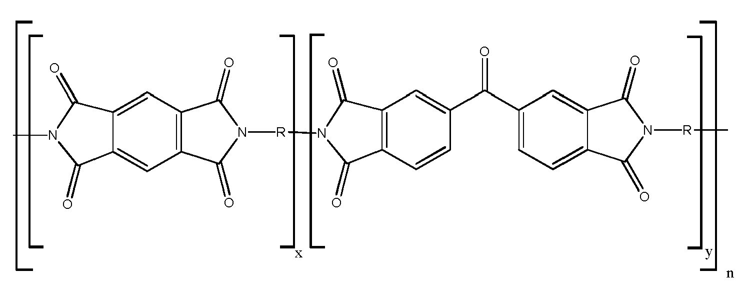 R ist ausgewählt aus der Gruppe bestehend aus 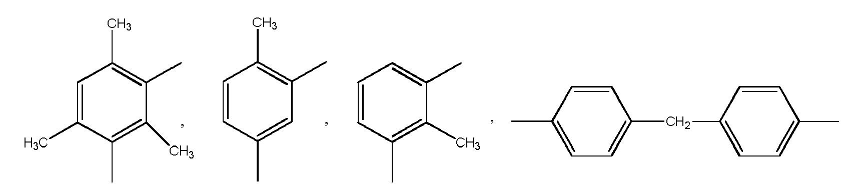 x,y: Molenbruch mit 0 < x < 0,5 und 1 > y > 0,5
auf. Derlei Membranen sind von der Firma Evonik Fibres GmbH unter dem Namen Polyimid P84 und Polyimid P84 HT erhältlich. Ein Verfahren zur Herstellung dieser bevorzugten Membranen wird in der WO 2011/009919 A1 offenbart. Sämtliche in dieser Offenlegungsschrift offenbarten Membranen können im erfindungsgemäßen Verfahren bevorzugt eingesetzt werden. Zur Vermeidung reiner Wiederholungen wird auf den Inhalt dieser Patentanmeldung hiermit vollumfänglich Bezug genommen. Es wurde gefunden, dass mit diesen Membranen die besten Trennergebnisse erzielt werden können.

Die Membranen werden bevorzugt in Form von Hohlfasermembranen und / oder Flachmembranen verwendet. Die Membranen werden zu Modulen verbaut, die dann in der Trennaufgabe zum Einsatz kommen. Als Module können alle in der Technik bekannten Gasseparationsmodule wie zum Beispiel aber nicht ausschließlich Hohlfasergasseparationsmodule, Spiralwickelgasseparationsmodule, Kissengasseparationsmodule oder Rohrbündelgasseparationsmodule zum Einsatz kommen.

Die Gasseparationsmembranmodule haben erfindungsgemäß eine Gemischtgasselektivität der Komponenten A und B (= Verhältnis des Stoffstromes A zum Stoffstrom B über die Membran) von mindestens 30, bevorzugt mindestens 35, besonders bevorzugt mindestens 40, ganz besonders bevorzugt von mindestens 45 und speziell bevorzugt von mindestens 45 bis 80. Höher selektive Membranen haben den Vorteil, dass die Trennung effektiver wird und weniger Permeat aus Retentattrennstufe (2) bzw. weniger Retentat aus der Permeattrennstufe (3) rückgeführt werden muss. Damit muss insbesondere bei Verwendung eines einstufigen Kompressors (4) weniger Gas doppelt komprimiert werden, was wirtschaftliche Vorteile beim Betrieb der Anlage mit sich bringt. Bei sehr selektiven Membranmodulen mit einer Selektivität von 45 müssen nur ca. 35% des als Rohgas in die Feedstromtrennstufe (1) eingebrachten Gases doppelt komprimiert werden, mit einem Membranmodul mit einer Selektivität von nur 10 kann es sein, dass die Doppelkomprimierung bis zu 300% beträgt. Die Angaben 35% bzw. 300% beziehen sich auf Versuche, bei denen ein Gasgemisches mit äquimolaren Mengen an Komponente A und B (= Feed) aufgegeben wurden, wobei 98,5% Komponente B im Retentatgas der Stufe(2) und 99% an Komponente B im Permeatstrom der Stufe (3) enthalten waren.

Es ist augenscheinlich, dass der erfindungsgemäße Prozess mit selektiveren Membranen wesentlich wirtschaftlicher geführt werden kann und die notwendigen Größe des Kompressors und die benötigten Energie reduziert werden können.

Das erfindungsgemäße Verfahren hat insbesondere die Vorteile, dass es ein reines Membranverfahren ist und ohne zusätzliche Aufreinigung der Permeat- und/oder Retentatströme (11) bzw. (8) für viele Anwendungen auskommt. Man braucht zum Bespiel bei der Aufreinigung von Biogas oder Erdgas (= Abtrennung von Kohlendioxid aus Methan) keine Druckwechseladsorption oder Aminwäsche mehr zur Feinreinigung des Retentates, sodass dieses ins Erdgasnetz eingespeist werden kann.

Weiterhin kann mit dem erfindungsgemäßen Verfahren gleichzeitig ein reiner Retentatstrom (8) und ein reiner Permeatstrom (11) bei der Bio- und Erdgasaufreinigung hergestellt werden. Es kann daher ohne große Verluste an Methan und ohne große Beeinträchtigung der Umwelt in die Atmosphäre entlassen werden, ohne dass das Gas noch weiter behandelt werden muss durch eine katalytische Nachverbrennung oder eine Nutzung in einem Blockheizkraftwerk. Es entfällt daher die Investition in weitere Anlagenteile, was zu einem wirtschaftlicheren Aufreinigungsprozess für Bio- und Erdgas führt.

Ein weiterer Vorteil ist darin zu sehen, dass das erfindungsgemäße Verfahren mit deutlich geringerem apparativem und energetischen Aufwand auskommt wie die bekannten Verfahren des Standes der Technik. Insbesondere durch die Kombination der erfindungsgemäßen Merkmale Gemischtgasselektivität, Steuerung der Menge der rückgeführten Retentatströme und Erhöhung der Permeatkomponente im Feedstrom (5) kann ein Verfahren zur Verfügung gestellt werden, welches den Verfahren des Standes der Technik deutlich überlegen ist.

Das erfindungsgemäße Verfahren kann insbesondere zur Auftrennung von Gasgemischen mit mindestens zwei Gasen eingesetzt werden, wobei ganz besonders bevorzugt als Gasgemisch eine Mischung von vorwiegend aber nicht ausschließlich Kohlendioxid und Methan oder vorwiegend aber nicht ausschließlich Wasserstoff und Methan oder vorwiegend aber nicht ausschließlich Kohlenmonooxid und Wasserstoff oder Rohbiogas oder Roherdgas aufgetrennt wird.

Die nachfolgenden Beispiele sollen die vorliegende Erfindung näher erläutern und beschreiben, schränken diese jedoch in keiner Weise ein.

In den nachfolgenden Beispielen konnte gezeigt werden, dass bei erfindungsgemäßer Verwendung der Verschaltung der Module und Anwendung bestimmter Drücke gleichzeitig Methan mit einer Reinheit von mehr als 96% und Kohlendioxid mit einer Reinheit von mehr als 97% aus einer Mischung von Kohlendioxid und Methan im Verhältnis 50 zu 50 hergestellt werden konnte.

Vergleichsbeispiel 1: Auftrennung einer Mischung aus Methan und Kohlendioxid mit einem Mischverhältnis von 50 zu 50 mit einer mäßig selektiven Polyimidmembran
Die Abb. 11 dargestellt Verschaltung wurde verwendet. Jede Stufe bestand aus einem Hohlfasermembranmodul bestehend aus Polyimid Hohlfasern der Firma UBE (Type NM B01 A). 1,78 m³/h eines Rohgasgemisches aus 50% Methan und 50% Kohlendioxid, was in etwa einer Gasmischung von Biogas entspricht, wird in eine Mischkammer (in Abb. 11 nicht gezeigt) eingebracht und dann zusammen mit rückgeführtem Gas aus den Gasströmen (9) und (10) auf 25 bar komprimiert. Das komprimierte und auf 20°C gekühlte Gas wird auf die Feedstromtrennstufe (1) aufgebracht. Das Retentat der Feedstromtrennstufe (1) wird anschließend über den ersten Retentatstrom (7) zur Retentattrennstufe (2) geleitet. Ein Reduzierventil (13) auf der Retentatseite der Retentattrennstufe (2) wird auf 18,2 bara eingestellt und bestimmt so die treibende Kraft durch die Membran der Membrantrennstufen (1) und (2). Das Retentat der Retentattrennstufe (2) hat einen Gehalt von 98,5% Methan und 1,5% Kohlendioxid. Es verlassen 0,895 m³/h dieser Mischung die Retentattrennstufe (2) Das Permeat der Retentattrennstufe (2) hat einen Volumenstrom von 0,743 m³/h mit einem Methangehalt von 34,5% und einem Kohlendioxidgehalt von 65,5 % und wird über den zweiten Permeatstrom (9) in die Mischkammer zurückgeführt und vom Kompressor (4) wieder komprimiert.

Das Permeat der Feedstromtrennstufe (1) hat einen Volumenstrom von 1,67 m³/h mit einem Kohlendioxidgehalt von 91,0 % und einem Methangehalt von 9,0 % und wird über den ersten Permeatstrom (6) als Feed in die Permeattrennstufe (3) geleitet. Der Druckabfall über die Membran der Stufe (1) erfolgt nicht bis zum Umgebungsdruck sondern wird durch ein Reduzierventil (14) auf der Retentatseite der Permeattrennstufe (3) auf 4,2 bara beschränkt. Das ergibt einen dritten Permeatstrom (11) aus Permeattrennstufe (3) von 0,885 m³/h mit einer Zusammensetzung von 99,0 % Kohlendioxid und nur 1,0 % Methan. Der dritte Retentatstrom (10) aus der Permeattrennstufe (3) beträgt 0,801 m³/h mit einer Zusammensetzung von 17,9 % Methan und 82,1 % Kohlendioxid und wird in die Mischkammer rückgeführt und wieder komprimiert. Die Summe an rückgeführten Gaströmen (9) und (10) beträgt daher 1,544 m³/h oder 86,7 % bezogen auf die zugeführte Menge an zu trennendem Gas. Man erhält reine Produktströme mit einer relativ hohen Doppelkomprimierungsrate. Die verwendeten Membranen zeigen eine moderate Gemischtgasselektivität von Kohlendioxid über Methan von 20.

### Beispiel 1: Auftrennung einer Mischung aus Methan und Kohlendioxid mit einem Mischverhältnis von 50 zu 50 mit einer hochselektiven Polyimidmembran

Die Abb. 11 dargestellt Verschaltung wurde verwendet. Jede Stufe bestand aus einem Hohlfasermembranmodul bestehend aus hochselektiven Polyimid Hohlfasern mit einer Trennfläche von ca. 5 m² pro Modul. Diese Polyimid Hohlfasern wurden gemäß Bespiel 19 der österreichischen Patentanmeldung A1164/2009 hergestellt, wobei jedoch mit einer Fällbadtemperatur von 40°C anstelle von 10°C gearbeitet wurde. 1 m³/h eines Rohgasgemisches aus 50% Methan und 50% Kohlendioxid, was in etwa einer Gasmischung von Biogas entspricht, wird in eine Mischkammer eingebracht und dann zusammen mit rückgeführtem Gas aus den Gasströmen (9) und (10) auf 25 bar komprimiert. Das komprimierte und auf 20°C gekühlte Gas wird auf die Feedstromtrennstufe (1) aufgebracht. Das Retentat dieser Stufe wird mittels des ersten Retentatstroms (7) der Retentattrennstufe (2) zugeführt. Ein Reduzierventil (13) auf der Retentatseite der Retentattrennstufe (2) wird auf 18,4 bara eingestellt und bestimmt so die treibende Kraft durch die Membran der Membrantrennstufen (1) und (2). Das Retentat der Retentattrennstufe (2) hat einen Gehalt von 98,5% Methan und 1,5% Kohlendioxid. Es verlassen 0,503 m³/h dieser Mischung die Retentattrennstufe (2). Das Permeat der Retentattrennstufe (2) hat einen Volumenstrom von 0,262 m³/h mit einem Methangehalt von 24,6% und einem Kohlendioxidgehalt von 75,4% und wird über den zweiten Permeatstrom (9) in die Mischkammer zurückgeführt und vom Kompressor (4) wieder komprimiert.

Das Permeat der Feedstromtrennstufe (1) hat einen Volumenstrom von 0,547 m³/h mit einem Kohlendioxidgehalt von 92,4% und einem Methangehalt von 7,6% und wird über den ersten Permeatstrom (6) als Feed in die Permeattrennstufe (3) geleitet. Der Druckabfall über die Membran der Stufe (1) erfolgt jedoch nicht bis zum Umgebungsdruck sondern wird durch ein Reduzierventil (14) auf der Retentatseite der Permeattrennstufe (3) auf 5,0 bara beschränkt. Das ergibt einen dritten Permeatstrom (11) aus Permeattrennstufe (3) von 0,497 m³/h mit einer Zusammensetzung von 99,0% Kohlendioxid und nur 1,0% Methan. Der dritte Retentatstrom (10) aus der Permeattrennstufe (3) beträgt 0,050 m³/h. Die Summe an rückgeführten Gasströmen (9) und (10) beträgt daher 0,312m³/h oder 31,2% bezogen auf die zugeführte Menge an zu trennendem Gas. Man erhält reine Produktströme mit einer moderaten Doppelkomprimierungsrate. Die verwendeten Membranen zeigen eine hohe Gemischtgasselektivität von Kohlendioxid über Methan von 45. Die hohe Selektivität von 45 gegenüber 20 im Vergleichsbeispiel ermöglicht daher einen ökonomisch günstigeren Prozess durch eine geringere Rekomprimierung von 31,2% statt 86,7%.

### Beispiel 2: Auftrennung einer Mischung aus Methan und Kohlendioxid mit einem Mischverhältnis von 50 zu 50 mit einer hochselektiven Polyimidmembran mit einem Methangehalt im Permeatstrom von weniger als 0,5%

Um verschiedenen Gesetzgebern zu genügen, ist es notwendig den Methanverlust in die Atmosphäre möglichst gering zu halten. Die Abb. 11 dargestellt Verschaltung wurde verwendet um die Konzentration von Methan im dritten Permeatstrom (11) auf unter 0,5 Vol% zu senken. Jede Stufe bestand aus einem Hohlfasermembranmodul bestehend aus hochselektiven Polyimid mit einer Trennfläche von ca. 5 m² pro Modul. Diese Polyimid Hohlfasern wurden gemäß Bespiel 19 der österreichischen Patentanmeldung A1164/2009 hergestellt, wobei jedoch mit einer Fällbadtemperatur von 40°C anstelle von 10°C gearbeitet wurde. 1 m³/h eines Rohgasgemisches aus 50% Methan und 50% Kohlendioxid, was in etwa einer Gasmischung von Biogas entspricht, wird in eine Mischkammer eingebracht und dann zusammen mit rückgeführtem Gas aus den Gasströmen (9) und (10) auf 25 bar komprimiert. Das komprimierte und auf 20°C gekühlte Gas wird auf die Feedstromtrennstufe (1) aufgebracht. Das Retentat dieser Stufe wird mittels des ersten Retentatstroms (7) der Retentattrennstufe (2) zugeführt. Ein Reduzierventil (13) auf der Retentatseite der Retentattrennstufe (2) wird auf 18,1 bara eingestellt und bestimmt so die treibende Kraft durch die Membran der Membrantrennstufen (1) und (2) Das Retentat der Retentattrennstufe (2) hat einen Gehalt von 98,5% Methan und 1,5% Kohlendioxid. Es verlassen 0,505 m³/h dieser Mischung die Retentattrennstufe (2). Das Permeat der Retentattrennstufe (2) hat einen Volumenstrom von 0,244 m³/h mit einem Methangehalt von 26,1% und einem Kohlendioxidgehalt von 73,9% und wird über den zweiten Permeatstrom (9) in die Mischkammer zurückgeführt und vom Kompressor (4) wieder komprimiert.
Das Permeat der Feedstromtrennstufe (1) hat einen Volumenstrom von 0,607 m³/h mit einem Kohlendioxidgehalt von 93,1% und einem Methangehalt von 6,9% und wird über den ersten Permeatstrom (6) als Feed in die Permeattrennstufe (3) geleitet. Der Druckabfall über die Membran der Stufe (1) erfolgt jedoch nicht bis zum Umgebungsdruck sondern wird durch ein Reduzierventil (14) auf der Retentatseite der Permeattrennstufe (3) auf 4,4 bara beschränkt. Das ergibt einen dritten Permeatstrom (11) aus Permeattrennstufe (3) von 0,495 m³/h mit einer Zusammensetzung von 99,5% Kohlendioxid und nur 0,5% Methan. Der dritte Retentatstrom (10) aus der Permeattrennstufe (3) beträgt 0,112 m³/h und hat eine Zusammensetzung von 35% Methan und 65% Kohlendioxid und wird in die Mischkammer zurückgeführt und wieder komprimiert. Die Summe an rückgeführten Strömen (9) und (10) beträgt daher 0,356m³/h oder 35,6% bezogen auf die zugeführte Menge an zu trennendem Gas. Man erhält reine Produktströme mit einer moderaten Doppelkomprimierungsrate. Die verwendeten Membranen zeigen eine hohe Gemischtgasselektivität von Kohlendioxid über Methan von 45.

### Beispiel 3: Auftrennung einer Mischung aus Methan und Kohlendioxid mit einem Mischverhältnis von 50 zu 50 mit einer hochselektiven Polyimidmembran mit einem Methangehalt im Permeatstrom von weniger als 0,5% unter Zuhilfenahme einer Vakuumpumpe für das Permeat der Stufe 2

Um verschiedenen Gesetzgebern zu genügen, ist es notwendig den Methanverlust in die Atmosphäre möglichst gering zu halten. Die Abb. 11 dargestellt Verschaltung, ergänzt um eine Vakuumpumpe, welche in Abb. 11 nicht dargestellt ist, wurde verwendet um die Konzentration von Methan im dritten Permeatstrom (11) auf unter 0,5 Vol. % zu senken. Jede Stufe bestand aus einem Hohlfasermembranmodul bestehend aus hochselektiven Polyimid Hohlfasern mit einer Trennfläche von ca. 5 m² pro Modul. Diese Polyimid Hohlfasern wurden gemäß Bespiel 19 der österreichischen Patentanmeldung A1164/2009 hergestellt, wobei jedoch mit einer Fällbadtemperatur von 40°C anstelle von 10°C gearbeitet wurde. 1 m³/h eines Rohgasgemisches aus 50% Methan und 50% Kohlendioxid, was in etwa einer Gasmischung von Biogas entspricht, wird in eine Mischkammer eingebracht und dann zusammen mit rückgeführtem Gas aus den Gasströmen (9) und (10) auf 25 bar komprimiert. Das komprimierte und auf 20°C gekühlte Gas wird auf die Feedstromtrennstufe (1) aufgebracht. Das Retentat dieser Stufe wird mittels des ersten Retentatstroms (7) der Retentattrennstufe (2) zugeführt. Ein Reduzierventil (13) auf der Retentatseite der Retentattrennstufe (2) wird auf 14,5 bara eingestellt und bestimmt so die treibende Kraft durch die Membran der Membrantrennstufen (1) und (2). Das Retentat der Retentattrennstufe (2) hat einen Gehalt von 98,5% Methan und 1,5% Kohlendioxid. Es verlassen 0,505 m³/h dieser Mischung die Retentattrennstufe (2) Das Permeat der Retentattrennstufe (2) hat einen Druck von 0,2 bara, hergestellt durch eine Vakuumpumpe und hat einen Volumenstrom von 0,371 m³/h mit einem Methangehalt von 13,3% und einem Kohlendioxidgehalt von 86,7%. Der Gasstrom wird von der Druckseite der Vakuumpumpe über den zweiten Permeatstrom (9) in die Mischkammer zurückgeführt und vom Kompressor (4) wieder komprimiert.
Das Permeat der Feedstromtrennstufe (1) hat einen Volumenstrom von 0,542 m³/h mit einem Kohlendioxidgehalt von 94,8% und einem Methangehalt von 5,2% und wird über den ersten Permeatstrom (6) als Feed in die Permeattrennstufe (3) geleitet. Der Druckabfall über die Membran der Stufe (1) erfolgt jedoch nicht bis zum Umgebungsdruck sondern wird durch ein Reduzierventil (14) auf der Retentatseite der Permeattrennstufe (3) auf 4,4 bara beschränkt. Das ergibt einen dritten Permeatstrom (11) aus Permeattrennstufe (3) von 0,495 m³/h mit einer Zusammensetzung von 99,5% Kohlendioxid und nur 0,5% Methan. Der dritte Retentatstrom (10) aus der Permeattrennstufe (3) beträgt 0,047 m³/h und hat eine Zusammensetzung von 54,9% Methan und 45,1% Kohlendioxid und wird in die Mischkammer zurückgeführt und wieder komprimiert. Die Summe an rückgeführten Strömen (9) und (10) beträgt daher 0,417m³/h oder 41,7% bezogen auf die zugeführte Menge an zu trennendem Gas. Man erhält reine Produktströme mit einer moderaten Doppelkomprimierungsrate. Die verwendeten Membranen zeigen eine hohe Gemischtgasselektivität von Kohlendioxid über Methan von 45. Im Gegensatz zu vorigem Beispiel 2 benötigt man weniger Druck (14,5 bar anstelle von 18,1 bar = 80,1% des Druckes) und nur 6,1% mehr Doppelkomprimierung, was zu einer Ersparnis bei der Komprimierarbeit führt.

### Beispiel 4: Auftrennung einer Mischung aus Methan und Kohlendioxid mit einem Mischverhältnis von 50 zu 50 mit einer hochselektiven Polyimidmembran mit einem Methangehalt im Permeatstrom von weniger als 0,5% unter Zuhilfenahme einer Vakuumpumpe für das Permeat der Stufe 2 und verbesserter Retentatreinheit

Um verschiedenen Gesetzgebern zu genügen, ist es notwendig den Methanverlust in die Atmosphäre möglichst gering zu halten.

Die Abb. 11 dargestellt Verschaltung, ergänzt um eine Vakuumpumpe, welche in Abb. 11 nicht dargestellt ist, wurde verwendet um die Konzentration von Methan im zweiten Retentatstrom (8) zu erhöhen. Durch das Vakuum wird das Druckverhältnis in der Retentattrennstufe (2) durch Verminderung des Druckes im zweiten Permeatstrom (9) verbessert, sodass die treibende Kraft erhöht wird und höhere Reinheiten im zweiten Retentatstrom (8) erzeilt werden können.

Jede Stufe bestand aus einem mit einer Trennfläche von ca. 5 m² pro Modul. Diese Polyimid Hohlfasern wurden gemäß Bespiel 19 der österreichischen Patentanmeldung A1164/2009 hergestellt, wobei jedoch mit einer Fällbadtemperatur von 40°C anstelle von 10°C gearbeitet wurde. 1 m³/h eines Rohgasgemisches aus 50% Methan und 50% Kohlendioxid, was in etwa einer Gasmischung von Biogas entspricht, wird in eine Mischkammer eingebracht und dann zusammen mit rückgeführtem Gas aus den Gasströmen (9) und (10) auf 25 bar komprimiert. Das komprimierte und auf 20°C gekühlte Gas wird auf die Feedstromtrennstufe (1) aufgebracht. Das Retentat dieser Stufe wird mittels des ersten Retentatstroms (7) der Retentattrennstufe (2) zugeführt. Ein Reduzierventil (13) auf der Retentatseite der Retentattrennstufe (2) wird auf 18,1 bara eingestellt und bestimmt so die treibende Kraft durch die Membran der Membrantrennstufen (1) und (2). Das Retentat der Retentattrennstufe (2) hat einen Gehalt von 99,7% Methan und 0,3% Kohlendioxid. Es verlassen 0,499 m³/h dieser Mischung die Retentattrennstufe (2) Das Permeat der Retentattrennstufe (2) hat einen Druck von 0,2 bara, hergestellt durch eine Vakuumpumpe und hat einen Volumenstrom von 0,258 m³/h mit einem Methangehalt von 25,8% und einem Kohlendioxidgehalt von 74,2%. Der Gasstrom wird von der Druckseite der Vakuumpumpe über den zweiten Permeatstrom (9) in die Mischkammer zurückgeführt und vom Kompressor (4) wieder komprimiert.

Das Permeat der Feedstromtrennstufe (1) hat einen Volumenstrom von 0,608 m³/h mit einem Kohlendioxidgehalt von 93,2% und einem Methangehalt von 6,8% und wird über den ersten Permeatstrom (6) als Feed in die Permeattrennstufe (3) geleitet. Der Druckabfall über die Membran der Stufe (1) erfolgt jedoch nicht bis zum Umgebungsdruck sondern wird durch ein Reduzierventil (14) auf der Retentatseite der Permeattrennstufe (3) auf 4,4 bara beschränkt. Das ergibt einen dritten Permeatstrom (11) aus Permeattrennstufe (3) von 0,501 m³/h mit einer Zusammensetzung von 99,5% Kohlendioxid und nur 0,5% Methan. Der dritte Retentatstrom (10) aus der Permeattrennstufe (3) beträgt 0,107 m³/h und hat eine Zusammensetzung von 36,2% Methan und 63,8% Kohlendioxid und wird in die Mischkammer zurückgeführt und wieder komprimiert. Die Summe an rückgeführten Strömen (9) und (10) beträgt daher 0,366m³/h oder 36,6% bezogen auf die zugeführte Menge an zu trennendem Gas. Man erhält reine Produktströme mit einer moderaten Doppelkomprimierungsrate. Die verwendeten Membranen zeigen eine hohe Gemischtgasselektivität von Kohlendioxid über Methan von 45. Im Gegensatz zu vorigem Beispiel 3 erhält man durch Verwendung einer Vakuumpumpe auf der Permeatseite der Retentattrennstufe (2) ein deutlich saubereres Retentat mit derselben Kompressorleistung. (99,7% Methan anstelle von 98,5%)

### Abbildungsverzeichnis:

- **Abb. 1:**: Einfluss des Druckverhältnisses und der Selektivität auf das Trennergebnis
- **Abb. 2:**: Einstufige Membrantrennstufe ohne Rückführung
- **Abb. 3:**: Einstufige Membrantrennstufe mit Rückführung
- **Abb. 4:**: Zweistufige Membrantrennstufe mit Rekompression und Rückführung
- **Abb. 5:**: Retentat- und permeatgestuft mit Rekompression und Rückführung in der zweiten Retentatstufe vor die erste Retentatstufe
- **Abb. 6:**: Retentat- und permeatgestuft mit Rekompression und Rückführung in der zweiten Retentatstufe vor die zweite Retentatstufe
- **Abb. 7:**: Permeatgestuft mit Rekompression
- **Abb. 8:**: Retentatgestuft mit Permeatrückführung aus der zweiten Stufe und permeatgestuft mit Rekompression
- **Abb. 9:**: Retentatgestuft mit Permeatrückführung aus der zweiten Stufe
- **Abb. 10:**: Intern permeatgestufte Verschaltung
- **Abb.11:**: Beispielhafte Verschaltung von mehreren Membranmodulen laut Erfindung

### Bezugszeichenliste:

- 1:: Feedstromtrennstufe
- 2:: Retentattrennstufe
- 3:: Permeattrennstufe 3
- 4:: einstufiger oder mehrstufiger Kompressor
- 5:: Feedstrom
- 6:: erster Permeatstrom
- 7:: erster Retentatstrom
- 8:: zweiter Retentatstrom
- 9:: zweiter Permeatstrom
- 10:: dritter Retentatstrom
- 11:: dritter Permeatstrom
- 12:: Optionales Druckminderventil im ersten Retentatstrom 7
- 13:: Optionales Druckminderventil im zweiten Retentatstrom 8
- 14:: Optionales Druckminderventil im dritten Retentatstrom 10

- 17:: Rohgasstrom

## Patentansprüche

1. Verfahren zur Trennung eines Rohgasstroms (17)
welches durchgeführt wird in einer Apparatur umfassend eine Feedstromtrennstufe (1), eine Retentattrennstufe (2) und eine Permeattrennstufe (3), jeweils als Membrantrennstufen, sowie zumindest einen Kompressor (4) und/oder zumindest eine, bevorzugt eine oder zwei, Vakuumpumpe(n), wobei
die Feedstromtrennstufe (1) einen Feedstrom (5), bestehend aus mindestens zwei Komponenten A und B, wobei A die leichter permeierende Komponente ist, in einen ersten Permeatstrom (6) und einen ersten Retentatstrom (7) auftrennt,
die Retentattrennstufe (2) den ersten Retentatstrom (7) in einen zweiten Permeatstrom (9), der dem Rohgasstrom (17) zugeführt wird, und einen zweiten Retentatstrom (8), der als erstes an Komponente B angereichertes Produkt entnommen wird, aufteilt,
die Permeattrennstufe (3) den ersten Permeatstrom (6), in einen dritten Retentatstrom (10), der dem Rohgasstrom (17) zugeführt wird, und einen dritten Permeatstrom (11), der als zweites an Komponente A angereichertes Produkt entnommen wird, aufteilt,
der erste Permeatstrom (6) keiner Rekompression unterworfen wird,
das im zweiten Permeatstrom (9) und im dritten Retentatstrom (10) rückgeführte Gasvolumen in Summe weniger als 60 Vol. % des Volumens des Rohgasstroms (17) beträgt,
die Konzentration der Komponente A , nach Rückführung des zweiten Permeatstroms (9) und des dritten Retentatstroms (10), im Feedstrom (5) erhöht wird, bevorzugt um mindestens 2%, besonders bevorzugt um mindestens 3% und besonders bevorzugt um 3 bis 40%, jeweils im Vergleich zu dessen Konzentration im Rohgasstrom (17), und
- zumindest in der Feedstromtrennstufe (1), bevorzugt jedoch in allen drei Membrantrennstufen (1) bis (3), Gasseparationsmembranmodule mit einer Gemischtgasselektivität hinsichtlich der Komponenten A und B von mindestens 30 verwendet werden.

2. Verfahren nach Anspruch 1,
**dadurch gekennzeichnet,**
**dass** der zweite Permeatstrom (9) und der dritte Retentatstrom (10) auf der Saugseite des Kompressors (4) zur Wideraufbereitung geleitet werden.

3. Verfahren nach Anspruch 1 oder 2,
**dadurch gekennzeichnet,**
**dass** ein mehrstufiger Kompressor (4) verwendet wird.

4. Verfahren nach Anspruch 3,
**dadurch gekennzeichnet,**
**dass** der zweite Permeatstrom (9) und /oder der dritte Retentatstrom (10) zwischen zwei Verdichtungsstufen in den Kompressor (4) eingeführt wird/werden.

5. Verfahren nach einem der Ansprüche 1 bis 4,
**dadurch gekennzeichnet,**
**dass** der erste Retentatstrom (7) und/oder der zweite Retentatstrom (8) und/oder der dritte Retentatstrom (10) durch ein Druckminderventil geleitet werden.

6. Verfahren nach einem der Ansprüche 1 bis 5,
**dadurch gekennzeichnet,**
**dass** in mindestens einer der Membrantrennstufen (1) bis (3) ein Gasseparationsmembranmodul mit einer Gemischtgasselektvität hinsichtlich der Komponenten A und B von mindestens 35, bevorzugt mindestens 40, besonders bevorzugt mindestens 45 verwendet wird.

7. Verfahren nach einem der Ansprüche 1 bis 6,
**dadurch gekennzeichnet,**
**dass** mindestens eine der Membrantrennstufen (1) bis (3) mehr als ein Gasseparationsmembranmodul umfasst, welche parallel und/oder seriell verschaltet sind.

8. Verfahren nach einem der Ansprüche 1 bis 7,
**dadurch gekennzeichnet,**
**dass** das/die Gasseparationsmembranmodul(e) aus Hohlfasermembranen und/oder Flachmembranen bestehen.

9. Verfahren nach einem der Ansprüche 1 bis 8,
**dadurch gekennzeichnet,**
**dass** als Materialien für die trennaktive Schicht der Membranen amorphe oder teilkristalline Kunststoffe verwendet werden wie zum Beispiel aber nicht ausschließlich Polyimide, Polyamide, Polysulfone, Celluloseacetate und Derivate, Polyphenylenoxide, Polysiloxane, Polymere mit intrinsischer Mikroporosität, Mixed Matrix Membranen, Facilitated Transport Membranen, Polyethylenoxide, Polypropylenoxide oder Mischungen daraus.

10. Verfahren nach Anspruch 9,
**dadurch gekennzeichnet,**
**dass** als Material für die trennaktive Schicht der Membranen ein Polyimid der allgemeinen Formel 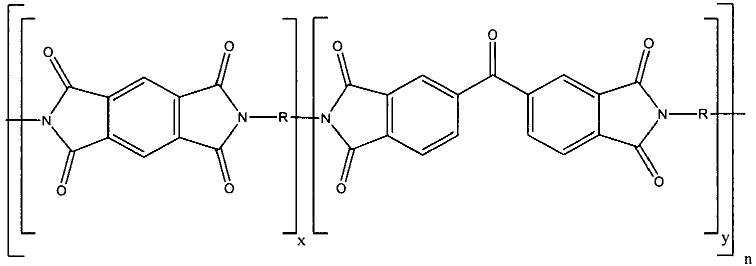 R ist ausgewählt aus der Gruppe bestehend aus 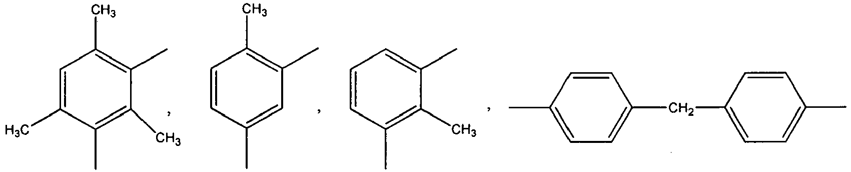 x,y: Molenbruch mit 0 < x < 0,5 und 1 > y > 0,5
verwendet wird.

11. Verfahren nach einem der Ansprüche 1 bis 10,
**dadurch gekennzeichnet,**
**dass** es sich bei den Komponenten A und B um Kohlendioxid und Methan oder Wasserstoff und Methan oder Kohlenmonoxid und Wasserstoff handelt.

12. Verfahren nach einem der Ansprüche 1 bis 11,
**dadurch gekennzeichnet,**
**dass** als Gasgemisch Rohbiogas oder Roherdgas oder eine Mischung enthaltend vorwiegend aber nicht ausschließlich die Komponenten A und B verwendet wird.

13. Verfahren nach einem der Ansprüche 1 bis 12, **dadurch gekennzeichnet,**
**dass** der Druck der Permeatseite (6) der Feedstromtrennstufe (1) bevorzugt mittels eines Druckminderventils (14) auf der Retentatseite der Permeattrennstufe (3) auf 1 bis 30 bar, vorzugsweise auf 2 bis 20 bar und besonders vorzugsweise auf 3 bis 10 bar eingestellt wird.

14. Verfahren nach einem der Ansprüche 1 bis 13,
**dadurch gekennzeichnet,**
**dass** der Druck des ersten und zweiten Retentatstroms (7) und (8) bevorzugt mittels eines Druckminderventils (13) im zweiten Retentatstrom (8), auf 1 bis 100 bar, vorzugsweise auf 5 bis 80 bar und besonders vorzugsweise auf 10 bis 70 bar eingestellt wird.

15. Verfahren nach einem der Ansprüche 1 bis 14,
**dadurch gekennzeichnet,**
**dass** als Triebkraft für die Trennaufgabe eine Partialdruckdifferenz zwischen der Retentat- und der Permeatseite in den jeweiligen Membrantrennstufen zum Einsatz kommt, wobei die Partialdruckdifferenz durch einen Kompressor im Feedstrom (5) und/ oder durch eine Vakuumpumpe (15) im zweiten und/oder dritten Permeatstrom (9) und / oder (11) und/oder durch einen permeatseitigen Spülgasstrom erzeugt wird.

16. Verfahren nach einem der Ansprüche 1 bis 15,
**dadurch gekennzeichnet,**
**dass** der Druck des Permeats der Feedstromtrennstufe (1) gleich oder erhöht ist gegenüber dem Umgebungsdruck, sodass noch eine Partialdruckdifferenz zwischen Retentat und Permeat der Permeattrennstufe (3) besteht und damit eine treibende Kraft gegeben ist für den Fall, dass das Permeat der Permeattrennstufe (3) auf Umgebungsdruck ist oder Unterdruck angelegt wird.

## Claims

1. Process for separating a crude gas stream (17), which is conducted in an apparatus comprising a feed stream separation stage (1), a retentate separation stage (2) and a permeate separation stage (3), each in the form of membrane separation stages, and at least one compressor (4) and/or at least one, preferably one or two, vacuum pump(s), wherein
the feed stream separation stage (1) separates a feed stream (5) consisting of at least two components A and B, where A is the more easily permeating component, into a first permeate stream (6) and a first retentate stream (7),
the retentate separation stage (2) divides the first retentate stream (7) into a second permeate stream (9) which is supplied to the crude gas stream (17), and a second retentate stream (8) which is withdrawn as first product enriched in component B,
the permeate separation stage (3) divides the first permeate stream (6) into a third retentate stream (10) which is supplied to the crude gas stream (17), and a third permeate stream (11) which is withdrawn as second product enriched in component A,
the first permeate stream (6) is not subjected to any recompression,
the gas volume recycled in the second permeate stream (9) and in the third retentate stream (10) totals less than 60% by volume of the volume of the crude gas stream (17),
the concentration of component A, after recycling of the second permeate stream (9) and of the third retentate stream (10), is increased in the feed stream (5), preferably by at least 2%, more preferably by at least 3% and more preferably by 3 to 40%, in each case compared to the concentration thereof in the crude gas stream (17), and
- at least in the feed stream separation stage (1), but preferably in all three membrane separation stages (1) to (3), gas separation membrane modules having a mixed gas selectivity with respect to components A and B of at least 30 are used.

2. Process according to Claim 1,
**characterized in that**
the second permeate stream (9) and the third retentate stream (10) are passed along the suction side of the compressor (4) for reprocessing.

3. Process according to Claim 1 or 2,
**characterized in that**
a multistage compressor (4) is used.

4. Process according to Claim 3,
**characterized in that**
the second permeate stream (9) and/or the third retentate stream (10) is/are introduced into the compressor (4) between two compression stages.

5. Process according to any of Claims 1 to 4,
**characterized in that**
the first retentate stream (7) and/or the second retentate stream (8) and/or the third retentate stream (10) is/are passed through a pressure-reducing valve.

6. Process according to any of Claims 1 to 5,
**characterized in that**
a gas separation membrane module having a mixed gas selectivity with respect to components A and B of at least 35, preferably at least 40, more preferably at least 45 is used in at least one of the membrane separation stages (1) to (3).

7. Process according to any of Claims 1 to 6,
**characterized in that**
at least one of the membrane separation stages (1) to (3) comprises more than one gas separation membrane module, which are connected in parallel and/or in series.

8. Process according to any of Claims 1 to 7,
**characterized in that**
the gas separation membrane module(s) consist(s) of hollow fiber membranes and/or flat membranes.

9. Process according to any of Claims 1 to 8,
**characterized in that**
the materials used for the separation-active layer of the membranes are amorphous or semicrystalline polymers, for example but not exclusively polyimides, polyamides, polysulfones, cellulose acetates and derivatives, polyphenylene oxides, polysiloxanes, polymers with intrinsic microporosity, mixed matrix membranes, facilitated transport membranes, polyethylene oxides, polypropylene oxides or mixtures thereof.

10. Process according to Claim 9,
**characterized in that**
the material used for the separation-active layer of the membranes is a polyimide of the general formula 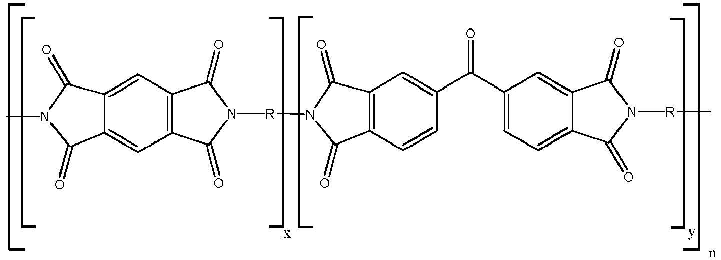 R is selected from the group consisting of 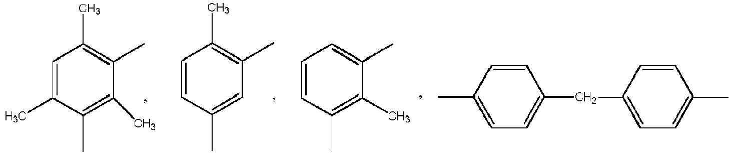 x, y: mol fraction where 0 < x < 0.5 and 1 > y > 0.5.

11. Process according to any of Claims 1 to 10,
**characterized in that**
components A and B are carbon dioxide and methane or hydrogen and methane or carbon monoxide and hydrogen.

12. Process according to any of Claims 1 to 11,
**characterized in that**
the gas mixture used is crude biogas or crude natural gas or a mixture comprising predominantly but not exclusively components A and B.

13. Process according to any of Claims 1 to 12,
**characterized in that**
the pressure on the permeate side (6) of the feed stream separation stage (1) is adjusted, preferably by means of a pressure-reducing valve (14) on the retentate side of the permeate separation stage (3), to 1 to 30 bar, preferably to 2 to 20 bar and more preferably to 3 to 10 bar.

14. Process according to any of Claims 1 to 13,
**characterized in that**
the pressure of the first and second retentate stream (7) and (8) is adjusted, preferably by means of a pressure-reducing valve (13) in the second retentate stream (8), to 1 to 100 bar, preferably to 5 to 80 bar and more preferably to 10 to 70 bar.

15. Process according to any of Claims 1 to 14,
**characterized in that**
the driving force used for the separation task is a partial pressure differential between the retentate side and the permeate side in the respective membrane separation stages, the partial pressure differential being generated by a compressor in the feed stream (5) and/or by a vacuum pump (15) in the second and/or third permeate stream (9) and/or (11) and/or by a permeate-side purge gas stream.

16. Process according to any of Claims 1 to 15,
**characterized in that**
the pressure of the permeate of the feed stream separation stage (1) is the same or increased relative to the ambient pressure, such that a partial pressure differential still exists between retentate and permeate of the permeate separation stage (3), and hence there is a driving force in the case that the permeate of the permeate separation stage (3) is at ambient pressure or reduced pressure is applied.

## Revendications

1. Procédé destiné à la séparation d'un flux de gaz brut (17), lequel circule dans un appareillage comprenant un étage de séparation du courant d'alimentation (1), un étage de séparation du rétentat (2) et un étage de séparation du perméat (3), lesquels agissent respectivement comme des étages de séparation à membranes, ainsi que tout au moins un compresseur (4) et/ou tout au moins une, de préférence une ou deux pompe(s) à vide,
où l'étage de séparation du courant d'alimentation (1) sépare un courant d'alimentation (5), lequel est constitué d'au moins deux composants A et B, A étant le composant de perméation plus léger, en un premier courant de perméat (6) et en un premier courant de rétentat (7),
où l'étage de séparation du rétentat (2) divise le premier courant de rétentat (7) en un deuxième courant de perméat (9), lequel est acheminé jusqu'au flux de gaz brut (17), et en un deuxième courant de rétentat (8), lequel est extrait sous la forme d'un premier produit enrichi du composant B,
où l'étage de séparation du perméat (3) divise le premier courant de perméat (6) en un troisième courant de rétentat (10), lequel est acheminé jusqu'au flux de gaz brut (17), et en un troisième courant de perméat (11), lequel est extrait sous la forme d'un deuxième produit enrichi du composant A, où le premier courant de perméat (6) n'est soumis à aucune recompression,
dans le deuxième courant de perméat (9) et dans le troisième courant de rétentat (10), le volume de gaz remis en circulation s'élève au total à moins de 60 % en volume du volume du flux de gaz brut (17), la concentration du composant A, après la remise en circulation du deuxième courant de perméat (9) et du troisième courant de rétentat (10), est augmentée dans le courant d'alimentation (5), de préférence d'au moins 2 %, en particulier de préférence d'au moins 3 % et en particulier de préférence de 3 à 40 %, respectivement en comparaison par rapport à sa concentration dans le flux de gaz brut (17), et tout au moins dans l'étage de séparation du courant d'alimentation (1), de préférence toutefois dans l'ensemble des trois étages de séparation à membranes (1) à (3), des modules à membranes destinés à la séparation du gaz sont employés, lesquels ont, au regard des composants A et B, une sélectivité du gaz de mélange d'au moins 30.

2. Procédé selon la revendication 1,
**caractérisé en ce que**,
le deuxième courant de perméat (9) et le troisième courant de rétentat (10) sont canalisés sur la partie de l'aspiration du compresseur (4) en vue du retraitement.

3. Procédé selon la revendication 1 ou 2,
**caractérisé en ce que**,
un compresseur (4) à plusieurs étages est utilisé.

4. Procédé selon la revendication 3,
**caractérisé en ce que**,
le deuxième courant de perméat (9) et/ou le troisième courant de rétentat (10) est/sont introduit(s) dans le compresseur (4) entre deux niveaux de compression.

5. Procédé selon l'une des revendications 1 à 4,
**caractérisé en ce que**,
le premier courant de rétentat (7) et/ou le deuxième courant de rétentat (8) et/ou le troisième courant de rétentat (10) sont canalisés par l'intermédiaire d'une valve réductrice de pression.

6. Procédé selon l'une des revendications 1 à 5,
**caractérisé en ce que**,
dans au moins l'un des étages de séparation à membranes (1) à (3), un module à membranes destiné à la séparation du gaz est utilisé, lequel possède, au regard der composants A et B, une sélectivité du gaz de mélange d'au moins 35, de préférence d'au moins 40, en particulier de préférence d'au moins 45.

7. Procédé selon l'une des revendications 1 à 6,
**caractérisé en ce que**,
au moins l'un des étages de séparation à membranes (1) à (3) comprend plus d'un module à membranes destiné à la séparation du gaz, lesquels modules sont interconnectés en parallèle et/ou en série.

8. Procédé selon l'une des revendications 1 à 7,
**caractérisé en ce que**,
le ou les module (s) à membranes destiné (s) à la séparation du gaz est/sont composé(s) de membranes à fibres creuses et/ou de membranes plates.

9. Procédé selon l'une des revendications 1 à 8,
**caractérisé en ce que**,
des matières synthétiques amorphes ou en partie cristallines sont utilisées en tant que matériaux pour la couche de séparation active des membranes, telles que par exemple, mais sans pour autant s'y limiter, des polyimides, des polyamides, des polysulfones, des acétates de cellulose et leurs dérivés, des oxydes de polyphénylène, des polysiloxanes, des polymères avec une microporosité intrinsèque, des membranes de type « matrice mixte », des membranes de type « transport facilité », des oxydes de polyéthylène, des oxydes de polypropylène ou des mélanges de ceux-ci.

10. Procédé selon la revendication 9,
**caractérisé en ce que**,
un polyimide de la formule générale 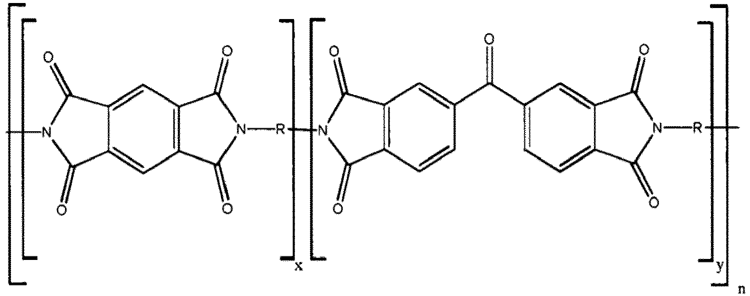 R est sélectionné à partir du groupe constitué de 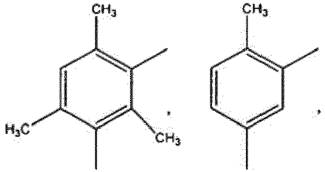 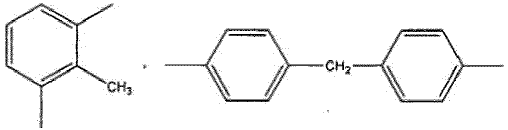 x, y : fraction molaire avec 0 < x < 0,5 et 1 > y > 0,5
est utilisé en tant que matériau pour la couche de séparation active des membranes.

11. Procédé selon l'une des revendications 1 à 10,
**caractérisé en ce que**,
les composants A et B en question sont du dioxyde de carbone et du méthane, ou de l'hydrogène et du méthane, ou du monoxyde de carbone et de l'hydrogène.

12. Procédé selon l'une des revendications 1 à 11,
**caractérisé en ce que**,
du biogaz brut ou du gaz naturel brut ou un mélange contenant de manière prépondérante, mais sans pour autant s'y limiter, les composants A et B, est utilisé en tant que mélange de gaz.

13. Procédé selon l'une des revendications 1 à 12
**caractérisé en ce que**,
la pression de la partie du perméat (6) de l'étage de séparation du courant d'alimentation (1) est réglée, de préférence au moyen d'une valve réductrice de pression (14) mise en place sur la partie du rétentat de l'étage de séparation du perméat (3), sur 1 à 30 bars, de préférence sur 2 à 20 bars et en particulier de préférence sur 3 à 10 bars.

14. Procédé selon l'une des revendications 1 à 13
**caractérisé en ce que**,
la pression du premier et du deuxième courant de rétentat (7) et (8) est réglée, de préférence au moyen d'une valve réductrice de pression (13) mise en place dans le deuxième courant de rétentat (8), sur 1 à 100 bars, de préférence sur 5 à 80 bars et en particulier de préférence sur 10 à 70 bars.

15. Procédé selon l'une des revendications 1 à 14
**caractérisé en ce que**,
il est fait usage d'une différence de pression partielle entre la partie du rétentat et la partie du perméat dans les étages de séparation à membranes respectifs en tant que force motrice pour la phase de séparation, la différence de pression partielle étant générée par l'intermédiaire d'un compresseur mis en place dans le courant d'alimentation (5) et/ou par l'intermédiaire d'une pompe à vide (15) mise en place dans le deuxième et/ou dans le troisième courant de perméat (9) et/ou (11) et/ou par l'intermédiaire d'un flux de gaz de rinçage situé dans la partie du perméat.

16. Procédé selon l'une des revendications 1 à 15
**caractérisé en ce que**,
la pression du perméat de l'étage de séparation du courant d'alimentation (1) est égale ou augmentée par rapport à la pression ambiante, de telle sorte qu'il existe encore une différence de pression partielle entre le rétentat et le perméat de l'étage de séparation du perméat (3) et que, par conséquent, une force motrice est ainsi créée pour le cas où une pression ambiante ou une dépression est appliquée sur le perméat de l'étage de séparation du perméat (3).
